# FASCICULE DE BREVET EUROPEEN

(11) **EP 4 094 025 B1**
(45) Date de publication et mention de la délivrance du brevet: **19.07.2023**
(21) Numéro de dépôt: 21700155.1
(22) Date de dépôt: 04.01.2021
(51) Int. Cl.: A23L 3/36, A23L 3/375, G01K 13/06, G01J 5/00, G01J 5/02, F25D 3/11

(54) **PROCÉDÉ DE MESURE EN LIGNE DE LA TEMPÉRATURE DE PRODUITS CIRCULANT SUR UN CONVOYEUR DANS UNE OPÉRATION DE TRAITEMENT EN ALIMENTAIRE**
VERFAHREN ZUR INLINE-MESSUNG DER TEMPERATUR VON AUF EINEM FÖRDERER TRANSPORTIERTEN PRODUKTEN IN EINEM LEBENSMITTELVERARBEITUNGSVERFAHREN
METHOD FOR IN-LINE MEASUREMENT OF THE TEMPERATURE OF PRODUCTS TRAVELLING ON A CONVEYOR IN A FOOD PROCESSING OPERATION

(30) Priorité: 20.01.2020 FR 2000512
(43) Date de publication de la demande: 30.11.2022
(73) Titulaire: L'AIR LIQUIDE, SOCIETE ANONYME POUR L'ETUDE ET L'EXPLOITATION DES PROCEDES GEORGES CLAUDE, 75321 Paris (FR)
(72) Inventeur: PATHIER, Didier, 78350 Les Loges-En-Josas (FR)
(74) Mandataire: Air Liquide
(86) Numéro de dépôt international: PCT/EP2021/050014
(87) Numéro de publication internationale: WO 2021/148245

(56) Documents cités:
- FR-A1- 2 860 068
- US-A1- 2011 265 492
- US-A1- 2017 138 661

## Description

La présente invention concerne le domaine de l'industrie alimentaire, et s'intéresse tout particulièrement aux procédés de mesure de la température de produits circulant sur un convoyeur dans une opération de traitement en alimentaire, notamment dans des opérations de surgélation.

Sur une ligne de production en alimentaire il est souvent crucial de connaitre la température des produits transformés :
- ainsi dans une opération de cuisson il est important de connaitre la température atteinte par les produits pour pouvoir arrêter la cuisson quand le produit est considéré comme assez cuit.
- tandis que dans le cas des procédés de refroidissement ou surgélation il est de même important de connaitre la température atteinte par les produits pour ajuster les paramètres opératoires, par exemple pour éviter des produits insuffisamment surgelés, mais aussi l'obtention de produits trop froids qui mènerait à une consommation d'énergie inutilement élevée.

On connait dans cette industrie la pratique consistant à prélever, de façon quasi aléatoire, un échantillon de produit sur la ligne et à mesurer manuellement la température de ce produit.

Cette pratique fonctionne bien sûr, mais il ne s'agit pas d'une mesure en continu, et elle est coûteuse puisqu'elle suppose l'affectation d'une personne qui consacre une partie de son temps à cette tâche.

Par ailleurs il est connu dans cette industrie d'utiliser un pyromètre pour mesurer la température de surface, en continu, de produits circulant sur un convoyeur. Cette méthode fournit une réponse utile et intéressante sur le terrain. En effet, on a très souvent constaté que cette mesure de la température de surface est une excellente indication de la température moyenne du produit, température qui nous intéresse en premier lieu. De plus, en réalisant la mesure en continu, le conducteur de la ligne de production est informé à tout moment de la bonne conduite de son procédé, il peut même programmer des alarmes qui l'alerteront des dérives en temps réel. En revanche il faut garder à l'esprit le fait que les portions vides du convoyeur, sans produit, vont donner une mesure de température qui peut fausser l'ensemble de l'évaluation. Une mesure simple de la température de surface des produits passant sur un convoyeur au moyen d'un pyromètre n'est donc pas suffisante. Les trop nombreuses fausses mesures (mesures de la température du convoyeur) font perdre toute valeur à cette mesure.

Les demandes de brevet US 2017/138661 A1, US 2011/265492 A1, FR 2 860 068 A1 décrivent des lignes de production alimentaire appartenant à l'état de la technique antérieure.

On voit donc bien qu'il serait extrêmement intéressant pour ce domaine technique de pouvoir disposer d'une méthode de mesure de la température des produits traités, en ligne et à faible cout. Cette mesure doit être réalisée en continu et ne doit pas être polluée par la température du convoyeur ou par toute autre interférence.

Comme on le verra plus en détails dans ce qui suit, la présente invention propose une méthode de mesure en ligne qui met en oeuvre les caractéristiques suivantes :
- On met en oeuvre un système de mesure de température, par exemple un pyromètre, fixe dans l'espace en une position à proximité (au-dessus ou sur le côté) du convoyeur, pour effectuer une mesure en continu de la température de surface des produits qui défilent. Dans de nombreuses applications, on préférera des systèmes de mesure de température sans contact comme le pyromètre ou tout autre système de mesure de température sans contact. Mais lorsque le contact avec le produit défilant sur le convoyeur est possible, on pourra aussi utiliser des thermomètres à contact qui frotteront sur la surface supérieure des produits. Dans ce cas, on pourra choisir des systèmes utilisant les technologies Pt100, Pt1000, autres sonde à résistance, thermocouples de tous types, fibre optique. Dans le cas où un pyromètre est utilisé, celui-ci fournit donc, et ceci sans distinction, un relevé des températures de surface du tapis convoyeur et des produits présents sur ce tapis convoyeur, la mesure étant faite en un point fixe en regard du pyromètre.
- On met également en oeuvre une mesure de distance à un laser (un laser ou un autre système de mesure de distance basé sur un autre principe comme par exemple les ultrasons, la lumière visible, ou encore un palpeur physique), qui mesure l'épaisseur du produit à l'endroit même où la mesure de température est réalisée par le pyromètre (ou autre système) ;
- un calculateur effectue alors l'évaluation suivante :
- quand l'épaisseur du produit est comprise entre une limite basse et une limite haute, le système considère alors que la température mesurée par le pyromètre est une valeur fiable de la température du produit;
- quand l'épaisseur du produit est supérieure à la limite haute (passage d'un corps étranger dans le champ de mesure), ou bien en deçà de la limite basse (convoyeur vide, sans produits), alors le système prend en compte et garde en mémoire la dernière valeur de température de produit mesurée par le pyromètre (et qui avait été considérée par le système comme une valeur fiable selon le paragraphe ci-dessus) et cette valeur est alors considérée provisoirement comme une bonne indication de la température du produit dont l'épaisseur mesurée est en dehors de la gamme de limites. Après une période de temps déterminée (typiquement quelques secondes à quelques minutes), durant laquelle l'épaisseur mesurée est en dehors de la dite gamme, le système conclue à l'absence de produits sur le convoyeur, et ne prend plus en compte les mesures de température fournies par le pyromètre (ou autre système), mesures considérées comme des valeurs « par défaut ». Cette valeur donnée par défaut est déterminée par l'utilisateur. Cette valeur ne doit pas prêter à confusion avec les températures réellement mesurées et on la fixe typiquement en dehors de la plage de mesure attendue. Ainsi dans le cas d'une mesure de la température de produits surgelés dont la température varie typiquement entre -15 et -25°C, on fixe par exemple cette valeur par défaut à +100°C. Lorsque le système indique +100°C, il sera évident pour l'utilisateur que la température mesurée n'est pas +100°C et que nous sommes dans le cas d'une absence de produit.
- on pourra par ailleurs avantageusement ajouter un autre calcul permettant d'affiner encore davantage la mesure. On pourra ainsi ajouter un calcul réalisant une moyenne glissante de la présence de produit sur le convoyeur.

C'est une moyenne calculée par exemple sur 1 ou 10 minutes. Les valeurs considérées sont 0 et 1. Avec des 0 et des 1 on peut faire une moyenne.

A titre d'exemple, on observe 2 minutes avec des produits (1) et 8 minutes sans produits (0), ce qui donnera une moyenne glissante de 0.2.

On peut calculer la moyenne de plusieurs manières, ainsi à titre illustratif pour une moyenne sur 10 minutes et 1 calcul par seconde :
- on ajoute les mesures une fois par seconde durant 10 minutes et on divise par 600
- on fait le calcul suivant une fois par seconde:
   nouvelle moyenne = (600 -1) / 600 x (moyenne antérieure) + mesure / 600

Ainsi comme on l'a compris à la lecture de ce qui précède, lorsque la mesure d'épaisseur est inférieure à la limite basse ou supérieure à la limite haute, la valeur 0 est considérée dans le calcul de la moyenne. Lorsque la mesure d'épaisseur est comprise entre la limite basse et la limite haute, la valeur 1 est considérée dans le calcul de la moyenne. Cette moyenne étant calculée en permanence, on définit une limite basse pour cette moyenne (Moyenne Min). Lorsque cette moyenne est supérieure à la Moyenne Min, alors les calculs exposés dans la section au-dessus restent inchangés. Lorsque la moyenne est inférieure à Moyenne Min, alors la température lue par le pyromètre n'est pas prise en compte. Le système prend alors en compte et garde en mémoire la dernière valeur de température de produit mesurée par le pyromètre.
- selon un autre des modes de mise en oeuvre de l'invention, on peut ajouter un calcul de lissage de la température. Lissage de température qui est en fait une moyenne glissante qui peut être calculée de plusieurs manières. A titre illustratif pour un lissage sur 3 minutes et 2 calculs par seconde :
- on ajoute les mesures 2 fois par seconde durant 3 minutes et on divise par 360
- on fait le calcul suivant 2 fois par seconde: nouvelle moyenne = (360 -1) / 360 x (moyenne antérieure) + mesure / 360.

Le coefficient de lissage peut être plus ou moins important suivant la réactivité et la stabilité de mesure recherchée. Le calcul de lissage sera interrompu lorsque la valeur mesurée sera égale à la température par défaut et lorsque l'épaisseur de produit sera inférieure à l'épaisseur minimum ou supérieure à l'épaisseur maximum.

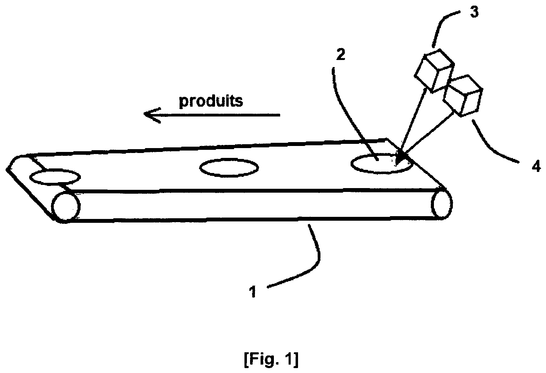

[Fig. 1] La figure 1 annexée permet de mieux visualiser une installation permettant de mettre en oeuvre l'invention, où l'on distingue des produits 2 circulant sur un convoyeur 1, avec la présence d'un pyromètre 3 et d'un laser 4.

Les expérimentations effectuées par la Demanderesse dans les conditions de l'invention montrent les points suivants :
- les températures mesurées selon l'invention sont plus fiables qu'une simple et classique mesure faite par pyromètre seul ;
- l'invention fournit par ailleurs une information supplémentaire avec l'information de présence ou non d'un produit sur le convoyeur ;
- le système utilisé est certes plus onéreux qu'un simple pyromètre mais la qualité et fiabilité de l'information obtenue (« filtrée ») est incomparable.

L'invention concerne alors un procédé de détermination de la température de produits transportés sur le tapis convoyeur d'un tunnel cryogénique, se caractérisant par la mise en oeuvre des mesures suivantes :
- On met en oeuvre un système de mesure de température, par exemple un pyromètre, fixe dans l'espace en une position à proximité, au-dessus ou sur le côté, du convoyeur, qui effectue une mesure en continu de la température de surface de produits qui défilent en regard du système de mesure de température.
- On met en oeuvre un système de mesure de distance tel qu'un laser ou un système à ultrasons, pour mesurer l'épaisseur d'un produit, dont la température a été mesurée lors de l'étape précédente.
- on dispose d'un calculateur qui effectue alors l'évaluation suivante :
   - quand l'épaisseur du produit est comprise entre une limite basse et une limite haute, on considère alors que la température mesurée pour ce produit par le système de mesure de température est une valeur fiable de la température du produit;
   - quand l'épaisseur du produit est supérieure à la limite haute ou bien en deçà de la limite basse, alors le calculateur prend en compte et garde en mémoire la dernière valeur de température de produit mesurée par le système et considérée par le calculateur comme une valeur fiable selon le paragraphe ci-dessus, et cette valeur est alors considérée comme une bonne indication de la température du produit dont l'épaisseur mesurée est en dehors de la gamme de limites ;
   - après une période de temps déterminée, durant laquelle l'épaisseur mesurée est en dehors de la dite gamme, le calculateur conclue à l'absence de produits sur le convoyeur, et ne prend plus en compte les mesures de température fournies par le système de mesure de température, mesures considérées comme des valeurs « par défaut ».

## Revendications

1. Procédé de détermination de la température de produits (2) transportés sur le tapis convoyeur (1) d'un tunnel cryogénique comprenant les étapes suivantes :
- On met en oeuvre un système de mesure de température (3), par exemple un pyromètre, fixe dans l'espace en une position à proximité, au-dessus ou sur le côté, du convoyeur, afin d'effectuer une mesure en continu de la température de surface de produits qui défilent en regard du système de mesure de température ;
- On met en oeuvre un système de mesure de distance (4) tel qu'un laser ou un système à ultrasons, pour mesurer l'épaisseur d'un produit dont la température a été mesurée lors de l'étape précédente, ladite mesure d'épaisseur étant réalisée à l'endroit même où la mesure de température est réalisée ;
- On dispose d'un calculateur qui effectue alors l'évaluation suivante :
a) quand l'épaisseur du produit est comprise entre une limite basse et une limite haute, on considère alors que la température mesurée pour ce produit par le système de mesure de température est une valeur fiable de la température du produit;
b) quand l'épaisseur du produit est supérieure à la limite haute ou bien en deçà de la limite basse, alors le calculateur prend en compte et garde en mémoire la dernière valeur de température de produit mesurée par le système et considérée par le calculateur comme une valeur fiable selon le paragraphe a) ci-dessus, et cette valeur est alors considérée comme une bonne indication de la température du produit dont l'épaisseur mesurée est en dehors de la gamme de limites ;
c) après une période de temps déterminée, durant laquelle l'épaisseur mesurée est en dehors de la dite gamme, le calculateur conclue à l'absence de produits sur le convoyeur, et ne prend plus en compte les mesures de température fournies par le système de mesure de température, mesures considérées comme des valeurs « par défaut ».

2. Procédé selon la revendication 1, **se caractérisant en ce que** l'on réalise de plus une moyenne glissante de la présence de produit sur le convoyeur de la façon suivante :
a. lorsque la mesure d'épaisseur est inférieure à la limite basse ou supérieure à la limite haute, la valeur 0 est considérée dans le calcul de la moyenne, lorsque la mesure d'épaisseur est comprise entre la limite basse et la limite haute, la valeur 1 est considérée dans le calcul de la moyenne, moyenne qui est calculée en permanence ;
b. on définit une limite basse pour la moyenne (Moyenne Min), et lorsque la moyenne est inférieure à Moyenne Min, alors la température lue par le système de mesure de température n'est pas prise en compte et le calculateur prend alors en compte et garde en mémoire la dernière valeur de température de produit mesurée par le système de mesure de température.

3. Procédé selon la revendication 1 ou 2, **se caractérisant en ce que** l'on procède à un calcul de lissage de la température.

## Patentansprüche

1. Verfahren zum Bestimmen der Temperatur von Produkten (2), die auf dem Förderband (1) eines kryogenen Tunnels transportiert werden, umfassend die folgenden Schritte:
- Man setzt ein Temperaturmesssystem (3), zum Beispiel ein Pyrometer, ein, das in dem Raum an einer Position in der Nähe, über oder an der Seite des Förderers ortsfest ist, um eine kontinuierliche Messung der Oberflächentemperatur von Produkten durchzuführen, die gegenüber dem Temperaturmesssystem vorbeilaufen;
- Man setzt ein Abstandsmesssystem (4) wie etwa einen Laser oder ein Ultraschallsystem ein, um die Dicke eines Produkts zu messen, dessen Temperatur beim vorhergehenden Schritt gemessen wurde, wobei die Dickenmessung an derselben Stelle ausgeführt wird, an der die Temperaturmessung ausgeführt wird;
- Man verfügt über einen Rechner, der dann die folgende Bewertung vornimmt:
a) wenn die Dicke des Produkts zwischen einem unteren Grenzwert und einem oberen Grenzwert liegt, dann wird davon ausgegangen, dass die für dieses Produkt von dem Temperaturmesssystem gemessene Temperatur ein zuverlässiger Wert der Temperatur des Produkts ist;
b) wenn die Dicke des Produkts über dem oberen Grenzwert oder aber unterhalb des unteren Grenzwerts liegt, dann berücksichtigt und speichert der Rechner den letzten von dem System gemessenen und von dem Rechner gemäß Absatz a) oben als ein zuverlässiger Wert betrachteten Produkttemperaturwert, und dieser Wert wird dann als eine richtige Angabe der Temperatur des Produkts betrachtet, dessen gemessene Dicke außerhalb des Grenzwertebereichs liegt;
c) nach einem bestimmten Zeitraum, während dessen die gemessene Dicke außerhalb des Bereichs liegt, schließt der Rechner auf das Nichtvorhandensein Produkten auf dem Förderer und berücksichtigt die von dem Temperaturmesssystem übermittelten Temperaturmessungen nicht mehr, wobei diese Messungen als "Default-Wert" betrachtet werden.

2. Verfahren nach Anspruch 1, **dadurch gekennzeichnet, dass** man zudem einen gleitenden Mittelwert für das Vorhandensein von Produkt auf dem Förderer folgendermaßen ausführt:
a. wenn die Dickenmessung unter dem unteren Grenzwert oder über dem oberen Grenzwert liegt, wird der Wert 0 bei der Berechnung des Mittelwerts betrachtet, wenn die Dickenmessung zwischen dem unteren Grenzwert und dem oberen Grenzwert liegt, wird der Wert 1 bei der Berechnung des Mittelwerts betrachtet, wobei der Mittelwert ständig berechnet wird;
b. man legt einen unteren Grenzwert für den Mittelwert (Mittelwert Min) fest, und wenn der Mittelwert unter Mittelwert Min liegt, dann wird die von dem Temperaturmesssystem erfasste Temperatur nicht berücksichtigt, und der Rechner berücksichtigt und speichert dann den letzten von dem Temperaturmesssystem gemessenen Produkttemperaturwert.

3. Verfahren nach Anspruch 1 oder 2, **dadurch gekennzeichnet, dass** man eine Glättungsberechnung der Temperatur vornimmt.

## Claims

1. Method for determining the temperature of products (2) transported on the conveyor belt (1) of a cryogenic tunnel, comprising the following steps:
- a temperature measurement system (3), for example a pyrometer, fixed in space in a position close to, above or to the side of the conveyor, is implemented in order to carry out a continuous measurement of the surface temperature of products moving along opposite the temperature measurement system;
- a distance measurement system (4) such as a laser or an ultrasound system is implemented to measure the thickness of a product whose temperature was measured during the previous step, said thickness measurement being carried out at the very place where the temperature measurement is carried out;
- there is provided a computer which then performs the following evaluation:
a) when the thickness of the product is between a lower limit and an upper limit, it is then considered that the temperature measured for this product by the temperature measurement system is a reliable value of the temperature of the product;
b) when the thickness of the product is greater than the upper limit or well below the lower limit, then the computer takes into account and stores in memory the last product temperature value measured by the system and considered by the computer as a reliable value according to paragraph a) above, and this value is then considered as a good indication of the temperature of the product whose measured thickness is outside the range of limits;
c) after a determined period of time, during which the measured thickness is outside said range, the computer concludes that there are no products on the conveyor, and no longer takes into account the temperature measurements provided by the temperature measurement system, measurements considered as "default" values.

2. Method according to Claim 1, **characterized in that** a sliding average of the presence of product on the conveyor is also carried out as follows:
a. when the thickness measurement is lower than the lower limit or higher than the upper limit, the value 0 is considered in the calculation of the average, when the thickness measurement is between the lower limit and the upper limit, the value 1 is considered in the calculation of the average, an average which is calculated continuously;
b. a lower limit is defined for the average (Average Min), and when the average is lower than Average Min, then the temperature read by the temperature measurement system is not taken into account and the computer then takes into account and stores in memory the last product temperature value measured by the temperature measurement system.

3. Method according to Claim 1 or 2, **characterized in that** a temperature smoothing calculation is carried out.
